Europäisches Patentamt

**European Patent Office**

Office européen des brevets

(11) Publication number: **0 120 582**
**A2**

# (12) EUROPEAN PATENT APPLICATION

(21) Application number: **84301002.6**

(22) Date of filing: **16.02.84**

(51) Int. Cl.³: **A 01 N 65/00**
**A 01 N 25/34**

(30) Priority: **24.02.83 US 469162**

(43) Date of publication of application:
**03.10.84 Bulletin 84/40**

(84) Designated Contracting States:
**AT BE CH DE FR GB IT LI LU NL SE**

(71) Applicant: **Baker, Stanley Z.**
**3115 Bremerton Road**
**Pepper Pike Ohio 44124(US)**

(72) Inventor: **Baker, Stanley Z.**
**3115 Bremerton Road**
**Pepper Pike Ohio 44124(US)**

(74) Representative: **Austin, Hedley William et al,**
**A.A. THORNTON & CO. Northumberland House 303-306**
**High Holborn**
**London WC1V 7LE(GB)**

(54) Vermin bait composition, and device containing such composition.

(57) The bait composition, which has improved acceptance to rodents and which is easily handled, comprises a mixture of rodent-appealing foodstuff, sufficient water to provide for a rodent's need and desire for moisture, a preservative ingredient in sufficient amounts to prevent foodstuff from deteriorating in the presence of air, an optional thickening ingredient, and a poison. In use, the composition is retained in a hermetically sealed container, such as a transparent pouch.

EP 0 120 582 A2

## Vermin bait composition, and device containing such composition

This application relates to the art of animal poisons for the destruction of vermin and, more particularly, to a bait having improved attractiveness to rats and mice.

The invention is particularly applicable to self-contained, ready-to-use toxic rodent baits and will be described with particular reference thereto, although it will be appreciated the invention can be used for any vermin or other undesirable animals.

Heretofore, most efforts to exterminate rodents using a poison have consisted either of a dry toxic food, or chemically poisoned water. Although either type of bait can be effective when properly used, each have some inherent undesirable features. A dry bait for instance, which usually consists of a type of grain or corn meal, cannot be used in wet or damp areas. These foods will generally mold or rot after several days in a damp environment; and once rodents inhabiting a certain location become accustomed to the fact that poison bait is in a deteriorated state, they will avoid even freshly laid bait of a similar type. In addition, dry bait can be easily spilled or scattered by the rodents.

Poisoned or chemically treated water can be even more difficult to use. The measuring and mixing of the poison can be a very messy operation and even dangerous when certain poison is used. Likewise, a dish or tray of poisoned water is always susceptible to spilling or tipping by the rodents or even when setting the bait. Attempts to wet or soak a dry bait with a liquid have also met with limited success, in that added liquid merely accelerates deterioration of the dry ingredients.

The present invention overcomes the problems generally associated with either dry or liquid toxic baits, and importantly is based on the fact that rats and mice must have moisture on which to live. It has been estimated that in an average day a normal size adult rat may consume one ounce of food and at the same time drink two ounces of water. Rodents therefore

- 2 -

will generally be found where food, together with abundant water, is present.

The present invention contemplates a bait which utilizes a rodent's natural craving for food and water, and provides a bait containing a substantial amount of water, which bait remains effective over an extended period of time.

Summary of Invention

In accordance with the present invention, a rodent killing bait is provided comprised of a mixture of a rodent-appealing foodstuff, water in sufficient amounts to produce a bait having at least a formable pasty consistency, but less than an amount which would produce a runny liquid, a mold inhibiting ingredient in sufficient quantity to prevent deterioration of the foodstuff when exposed to air, and a poison ingredient.

Further in accordance with the present invention, a thickening agent may be added to the bait, which can enable the bait to retain high amounts of water while maintaining a desired consistency.

Still further in accordance with the present invention, a ready to use rodent killing device is provided including a hermetically sealed pliable container impervious to moisture containing a mixture of a rodent-appealing foodstuff, water in sufficient amount to moisten the foodstuff, a preservative ingredient, a thickening ingredient, and a poison.

The primary object of the present invention is to provide an effective toxic bait which is highly attractive to rats and mice.

Another object of the present invention is to provide a rodent killing bait having a rodent-appealing foodstuff and containing a substantial amount of moisture.

A still further object of the present invention is to provide a semi-moist rodent killing bait, which bait may be exposed to atmospheric conditions for an extended period of time without deteriorating.

A still further object of the present invention is to provide a ready to use rodent killing device containing a

- 3 -

semi-moist slurry-like bait as described above, which device
is effective and easy to use.

Brief Description of the Drawings

These and other objects and advantages will become apparent
from the following description taken together with the accompanying drawings in which:

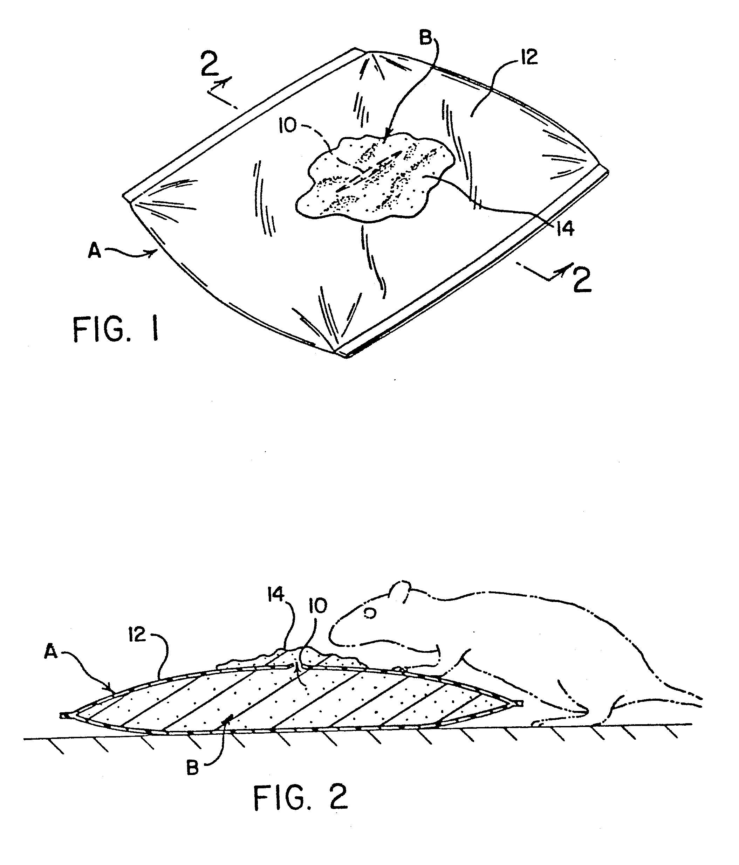

FIGURE 1 is a perspective view of a rodent poisoning device
incorporating the concept of the present invention; and,

FIGURE 2 is a cross-sectional view taken generally along
line 2-2 of FIGURE 1.

Detailed Description of the Preferred Embodiment

Referring now to the drawings wherein the showing is for
the purpose of illustrating a preferred embodiment of the invention only, and not for the purpose of limiting same, a
plastic pouch or envelope A containing a semi-moist, slurry-
like bait B is shown.

The envelope or pouch A is of a pliable material which
is impervious to moisture. The material itself may be a metal
foil or any of a number of suitable plastic compositions having
sufficient strength and pliability. The envelope or pouch is preferably plastic and clear to allow rodents to observe the bait
contained therein, however, opaque or colored plastic or foil pouches
can be used since rodents inhabit, and the pouch may be placed in
dark, unlit places. The envelope or pouch A is hermetically
sealed and can be formed by sealing one end of a tubular sleeve
comprised of the plastic material, and then after the semi-moist
bait B has been inserted by sealing the opposite end.

The size or dimensions of the pouch and in turn the
amount of bait B contained therein can vary depending on
several factors. One factor is the type of poison or
rodenticide used in the bait. For example, if an acute
or quick-killer poison, which is sometimes referred to as

- 4 -

a single-dose rodenticide, is used only a single feeding is sufficient to kill and therefore less bait and a smaller packet would be necessary. A chronic or multiple dose rodenticide, namely one which requires several feedings to kill, would require a larger volume of bait to be ingested by the rodent to kill and therefore a large packet or pouch would be required. In addition to the type of poison used, other factors such as the number of rodents to be killed, or production and packaging preferences could determine the size of the packet or pouch A. In the preferred embodiment a pouch capable of containing roughly two ounces of a slurry-like bait is used.

In accordance with the invention, bait B is comprised of a rodent-appealing foodstuff, water, a preservative ingredient, a thickening ingredient and poison.

The concept of the present invention is not restricted or limited to these ingredients in any specific proportions, rather bait B could generally be comprised of the above mentioned ingredients in the following amounts by weight; foodstuff 10% to 30%, water 30% to 80%, preservative ingredient 0.5 to 5% and thickening ingredients 0.0% to 5%. It should be noted that a slurry-like bait can be produced without the thickening ingredient. No proportion or range can be set for the poison ingredient since almost any type of poison can be used and the amount of each poison required would depend on the potency and concentration of such poison. For example, an extremely potent poison in a pure state would require only a miniscule amount whereas a less potent poison would require much greater amounts to be effective.

The foodstuff is generally any particulate material or mixture of such materials which a rodent may find appealing to eat. Grain or meal (which are generally used in rodent baits), or basically any other substance can be used, either alone or in a mixture so long as the foodstuff is of a nature adaptable to be made into a slurry-like consistency. Grain, such as oats wheat, rice or corn, or dried fruit such as apples or raisons, are all suitable ingredients, however in the preferred embodiment the foodstuff consists of a mixture of yellow corn meal, peanut butter, sugar and salt. This mixture has been found to be extremely appealing to rats and mice.

The largest ingredient of bait B by weight is water. Water is added in amounts sufficient to produce at least a paste-like or mush-like bait of a formable consistency, yet not so much water as to make the mixture a runny liquid. In the preferred embodiment, water is added in sufficient amounts to create a slurry-like consistency, similar to applesauce, which does not freely flow except under externally exerted forces.

Importantly, a preservative ingredient, or mold inhibitor, is added in sufficient amount to counteract the deteriorating effect the presence of the water has on the foodstuff. Various types or brands of preservatives or mold inhibitors, such as sodium benzoate, may be used, but in the preferred embodiment, potassium sorbate is added to retard the deterioration of the foodstuff.

As it is desirable to maintain the percentage of water in the bait as high as possible without unduly thinning the bait to a runny liquid, a thickening ingredient is preferably added to the mixture in place of additional foodstuff to thicken or gel the bait. The thickening ingredient enables the bait to have a high water content and maintain its slurry-like consistency, without requiring additional costly foodstuff. In the prefereed embodiment, "Triumph" stabilizer manufactured by Germantown Manufacturing Company of Broomall, Pennsylvania is used.

With regard to the exact formula, a preferred embodiment includes the following ingredients at approximately the following proportions: 70 fluid ounces (2070 grams : 2070 ml.) water; 0.39 ounces (10.92 grams) salt; 6.07 ounces (169.96 grams) sugar; 10 ounces (280 grams) peanut butter; 8 ounces (224 grams) yellow corn meal; 1.82 ounces (50.96 grams) potassium sorbate; 1.92 ounces (36.12 grams) Triumph stabilizer.

- 6 -

These ingredients are combined by boiling the water, then adding the salt, sugar and potassium sorbate. The peanut butter is then added and the mixture is stirred until the peanut butter is dissolved in the water. The corn meal and stabilizer are then thoroughly mixed with each other, and this combination is then stirred into the simmering mixture. Since the thickening ingredient, i.e. the stabilizer, acts quickly with water, the corn meal and stabilizer should be slowly sifted and stirred into the mixture to avoid forming globs or lumps in the bait. When the corn meal and the stabilizer are fully mixed and dissolved, the entire mixture is allowed to cool.

The formula and method described heretofore will produce roughly a five pound batch of a harmless slurry-like bait having a consistency similar to applesauce. It should be apparent that countless other baits can be produced by substituting various matter for the foodstuff, and alternative types of thickening ingredients and mold inhibitors. The aforementioned formula has been found to be extremely successful in attracting rodents primarily due to the moisture content of the slurry and specific ingredients forming the foodstuff.

To this harmless slurry is added an active poison ingredient. In the preferred embodiment the poison ingredient is an anti-coagulant called diphacinone (2-diphenylacetyl-1, 3-indandione). The present invention, however, is not limited to diphacinone or even to an anti-coagulant type of poison. Basically any type of rodenticide, poison, or any substance in any form which can kill rodents may be suitable as the poisoning ingredient. It is not intended to limit the scope of the present invention to a specific known poison or rodenticide. Any type of poison or substance in powder or liquid form may be added. The amount of the poison added, of course, will vary depending upon the potency of the poisoning ingredient. As previously mentioned, diphacinone is used as the poisoning ingredient in the preferred embodiment. A concentrated powder form of diphacinone manufactured by Velsicol Chemical Company of Chicago, Illinois is used. Diphacinone is added to the harmless slurry in such proportion so as to produce a bait having a .005% active ingredient (.005% active ingredient is a limit set by federal regulation for baits using diphacinone).

After the poison is added, the semi-moist slurry-like bait B is packaged in a clear pliable plastic pouch or envelope A. Bait B should be packaged as soon as possible after preparation to avoid any moisture evaporation from the bait. It will be appreciated that numerous other means and methods can be used for packaging bait produced in accordance with the present invention.

To use the present invention, pouch A containing bait B is placed in any area where rodents are believed to inhabit. A small slit or incision 10 approximately one or two inches in length is made across the pouch surface 12 of pouch A. A slight squeeze of pouch A will force a small amount of the slurry-like bait B to ooze or stream out of the pouch and form a thickened puddle 14 on upper surface 12 thereof. A slight internal pressure, which can result from packaging, may be sufficient to force a small amount of bait B out of incision 10. This small amount of exposed bait will lure rodents in the vicinity. Also the clear pouch or packet A enables the rodent to see the bait remaining in the pouch, which can easily be obtained by the rodent by gnawing or tearing away the pouch. Because only a small amount of bait is exposed to the atmosphere, evaporation of moisture from the entire package is retarded. In addition, it has been found that after extended periods of exposure, the outer surface of the bait begins to harden while the other material remains moist. This property along with the mold inhibitor enables the bait to remain effective for extended periods of time.

- 8 -

A carefully conducted test has demonstrated that a bait produced with the formula set forth above is extremely successful in eliminating rodents. Such tests closely followed the EPA's House Mouse Anticoagulant Dry Bait Test Method (TSD designation; 1.204). The test was conducted in a single cage using eight mice. The standard TSD rodent challenge diet which consists of corn meal (whole yellow ground corn) 65% by weight, rolled oats (steamed) 25% by weight, sugar (10x powdered confectioners) 5% by weight, and corn oil 5% by weight was used. Equal amounts of the challenge diet and applicant's semi-moist bait as described above were placed in the cage. Water was available to each animal ad libitum. The total daily consumption of both baits, and the percentage of each formula consumed were recorded daily, as were the number of mice killed per day. Each day the position of the two baits in the cage was transposed. The results of the test showed that all the mice were killed within five days, and of the total food consumed, 64.9% had been applicant's semi-moist slurry-like bait. The test demonstrates a substantial preference by the test mice for applicant's semi-moist bait as compared to the standard challenge diet. A product tested under the EPA method is considered satsifactory if a minimum of 33% of the tested product had been consumed and if a minimum mortality of 90% is obtained after fifteen days. In light of these standards, the results of the informal tests demonstrate the considerable effectiveness of applicant's product in killing rodents. It is believed that the preference of the semi-moist bait by the test animals is due primarily to the high moisture content of the bait. The rodents are naturally attracted to the bait which contains both food and moisture in easily ingested form.

Numerous modifications and alterations will occur to others upon their reading and understanding of this specification. It is intended that all such modifications and alterations be included insofar as they come within the scope of the invention as claimed or equivalence thereof.

Claims:

1.      A toxic vermin bait composition comprising a
mixture of a vermin-appealing foodstuff and a poison,
characterised in that the composition further comprises
water in sufficient amount that the composition has
a formable consistency but is not liquid; a preservative; and, optionally, a thickening agent.

2.      A bait composition according to claim 1, which
has a slurry-like consistency.

3.      A bait composition according to claim 1 or 2,
which comprises 10 to 30% by weight of the foodstuff,
30 to 80% by weight of water, 0.5 to 5% by weight of the
preservative and 0 to 5% by weight of the thickening
agent.

4.      A bait composition according to any of claims
1 to 3, in which the foodstuff comprises peanut
butter, corn meal, sugar and salt.

5.      A bait composition according to claim 4, in
which the preservative is potassium sorbate.

6.      A bait composition according to claim 4 or 5,
in which the poison is 2-diphenylacetyl-1,3-indandione.

7.      A ready-to-use rodent poisoning device, which
comprises a hermetically sealed moisture-impermeable
pliable container containing a bait composition as
claimed in any of claims 1 to 6.

8.      A device according to claim 7, in which the
container is a transparent pouch.

FIG. 1

FIG. 2